# EUROPÄISCHE PATENTSCHRIFT

(11) **EP 1 898 864 B1**
(45) Veröffentlichungstag und Bekanntmachung des Hinweises auf die Patenterteilung: **22.05.2013**
(21) Anmeldenummer: 06763739.7
(22) Anmeldetag: 15.06.2006
(51) Int. Cl.: A61J 11/00, A61J 17/00, C09K 19/00

(54) **Saug- und Kauartikel für Babys oder Kleinkinder.**
Suction and chewing article for babies or small children.
Article de mastication ou de succion destiné a des bébés ou des enfants en bas âge.

(30) Priorität: 06.07.2005 DE 202005011043 U
(43) Veröffentlichungstag der Anmeldung: 19.03.2008
(73) Patentinhaber: MAPA GmbH, Gummi- und Plastikwerke, D-27404 Zeven (DE)
(72) Erfinder: BERGER, Steffen, 27404 Zeven (DE); DU CHESNE, Alexander, 27404 Heeslingen (DE); MARR, Günter, 21224 Rosengarten (DE)
(74) Vertreter: Reinstädler, Diane
(86) Internationale Anmeldenummer: PCT/EP2006/063245
(87) Internationale Veröffentlichungsnummer: WO 2007/003494

(56) Entgegenhaltungen:
- EP-A- 0 689 826
- DE-A1- 19 917 067

## Beschreibung

Die Erfindung betrifft Saug- und Kauartikel für Babys oder Kleinkinder, umfassend mindestens ein Mundstück aus einem im Wesentlichen elastomeren Material, welches zumindest eine Elastomerkomponente enthält.

Saug- und Kauartikel für Babys und Kleinkinder sind bekannt. Diese umfassen beispielsweise Sauger, wie Beruhigungssauger ("Schnuller") oder auf Trinkflaschen aufsetzbare Ernährungssauger, Trinktüllen oder massive Kaugegenstände, wie Beißringe, oder verwandte Produkte. Beispielsweise sind verschiedene Sauger für Babys und Kleinkinder aus den Druckschriften DE-U-9415655, DE-U-29510460, DE-U-20007609, DE-C-3232101, DE-C-3241845, DE-C-3347876 und DE-C-4229224 bekannt.

Die vorgenannten Artikel umfassen jeweils wenigstens ein Mundstück, das dazu bestimmt ist, in den Mund des Kindes zu Saug- und/oder Kauzwecken aufgenommen zu werden. Bei Saugern beispielsweise ist das Mundstück ein gummielastischer Nippel, der von einem härteren Mundschild (bei Beruhigungssaugern) beziehungsweise Flaschenaufsatz (bei Ernährungssaugern) gehalten wird. Im Falle von reinen Beißgegenständen, wie Beißringen oder dergleichen, macht das Mundstück häufig den gesamten Artikel aus, ohne dass weitere Teile vorhanden sind. Das Mundstück ist grundsätzlich aus einem Material mit im Wesentlichen elastischen Eigenschaften gefertigt, welches ein oder mehrere Elastomere, typischerweise vernetzter Latex, enthält.

Bei all diesen Produkten ist ein Abbeißen von Teilstücken des elastischen Mundstückes durch das Kind zu vermeiden, um ein unerwünschtes Verschlucken zu verhindern. Angesichts der beim bestimmungsgemäßen Gebrauch dieser Artikel auftretenden erheblichen mechanischen Beanspruchungen, sind somit an die Materialeigenschaften, insbesondere die Reißfestigkeit, hohe Ansprüche zu stellen und oftmals gesetzlich geregelt. Auf der anderen Seite müssen sämtliche Inhaltsstoffe selbstverständlichen strengen toxikologischen Anforderungen genügen und eine Migration und Freisetzung von Inhaltsstoffen sicher verhindert werden. Es sind in der Polymerchemie zwar allgemein Zusatzstoffe bekannt, die eine Erhöhung der Festigkeit bewirken, jedoch ist ihre Beimischung in Elastomere im vorliegenden Anwendungsfall oftmals nicht zulässig.

Auf der anderen Seite ist die Einarbeitung von flüssigkristallinen Pigmenten (LC-Pigmente) in vorwiegend thermoplastische Kunststoffmatrizes für Lacke, Beschichtungen, Folien und dergleichen bekannt (DE-C-4418490, DE-C-19639179, EP-B-0758362, EP-B-0758363, EP-B-0887398). LC-Pigmente umfassen eine oder mehrere an sich farblose LC-Verbindungen mit flüssigkristallinen Eigenschaften, die im geordneten Zustand -(nematisch, smektisch, cholesterisch, diskotisch) durch Vernetzung "eingefroren" sind. LC-Pigmente sind an sich farblos, das heißt sie weisen keine über Lichtabsorptionseffekte resultierende Farbe auf. Vielmehr verleihen LC-Pigmente aufgrund von Lichtbeugung den Materialien vom Betrachtungswinkel abhängige Farbeffekte, insbesondere winkelabhängige Farbumschläge ("Farbflops"). DE-A-19917067 beschreibt LC-Pigmente mit chiraler Phase für Effektlackierungen. Das LC-Pigment umfasst eine Mischung aus einer stäbchenförmigen polymerisierbaren Verbindung und einer chiralen ebenfalls polymerisierbaren Verbindung. Die Mischung wird durch Rakeln oder Walzen zu einem Film ausgezogen und dabei orientiert, wobei aufgrund des chiralen Bestandteils eine helikale Überstruktur entsteht. In diesem flüssigkristallinen Zustand werden die Verbindungen dreidimensional vernetzt und die geordnete Struktur gleichsam eingefroren. Der so erzeugte Film wird zu plättchenförmigen Pigmentpartikeln zermahlen, die den entsprechenden Beschichtungsmaterialien zugesetzt werden. In US 2004 023993 A ist die Verwendung derartiger LC-Pigmente auf Acrylatbasis in dekorativen Körperpflegeprodukten beschrieben, die auf der Haut einen Glitzereffekt hervorrufen.

EP 0 689 826 A1 beschreibt Saug- und Kauartikel, die ein elastomeres Basismaterial, beispielsweise Silicon oder Latex, unvernetzte Flüssigkristalle enthalten, die in Abhängigkeit von der Temperatur ihre Farbe oder Durchlässigkeit verändern, um die Körpertemperatur des Kindes oder die Speisentemperatur anzuzeigen.

Aufgabe der vorliegenden Erfindung ist die Bereitstellung von Saug- und Kauartikeln für Babys oder Kleinkinder, die gegenüber bekannten Artikeln eine verbesserte Reißfestigkeit aufweisen. Dabei sollen die Artikel lebensmitteltauglich sein, das heißt in Kontakt mit Lebensmitteln gesundheitlich unbedenklich sein.

Die Aufgabe wird durch Saug- und Kauartikel mit den Merkmalen des Anspruchs 1 gelöst. Die erfindungsgemäßen Artikel umfassen mindestens ein Mundstück aus einem Material mit im Wesentlichen elastomeren Eigenschaften (elastomeres Material), welches neben zumindest einer Elastomerkomponente zumindest ein flüssigkristallines Pigment (LC-Pigment) enthält. Das zumindest eine LC-Pigment umfasst mindestens eine flüssigkristalline Substanz, die in einer zumindest teilweise geordneten Struktur dreidimensional vernetzt vorliegt. Überraschend wurde nämlich gefunden, dass die Zumischung von vernetzten LC-Pigmenten in die zur Herstellung des elastomeren Materials verwendete Polymermasse zu einer signifikanten Erhöhung der Reißfestigkeit führt. Dabei zeigen die LC-Pigmente trotz ihrer unterschiedlichen Polarität gegenüber dem Matrixpolymer in Migrationsversuchen keinerlei Tendenz, sich von dem Matrixmaterial zu entmischen, was ihren Einsatz in den erfindungsgemäßen Artikeln erst ermöglicht.

Daneben verleihen die an sich farblosen LC-Pigmente dem elastomeren Material auch ansprechende optische Effekte, die in Abhängigkeit des Matrixpolymers und der Art der LC-Pigmente sehr unterschiedlich sein können. Insbesondere werden die LC-Pigmente vorzugsweise so gewählt, dass eine farbgebende und/oder reflektierende optische Wirkung (Glitzereffekt) resultiert, wobei der Farbeindruck mit Lichteinfalls- und Betrachtungswinkel variiert. Dabei entsteht - wie bei Flüssigkristallen üblich - der Farbeindruck nicht durch Absorption bestimmter Wellenlängen, sondern durch Beugungs- und Interferenzerscheinungen an der quasikristallinen Gitterstruktur des LC-Pigments. Bei einer typischerweise nicht-flächigen, vielmehr komplexen dreidimensionalen Gestalt des erfindungsgemäßen Artikels beziehungsweise des Mundstücks resultieren somit interessante Farbflops im Bereich von Rundungen auch bei fester Betrachtungsposition. Überraschend treten die optischen Effekte dabei nicht nur bei den transparenten Materialien wie Silikon auf, sondern auch in nichttransparenten Materialien wie Latex. Nach einer vorteilhaften Ausgestaltung der Erfindung wird die optische Wirkung noch dadurch unterstützt und/oder variiert, dass das elastomere Material des Mundstücks des Artikels neben dem LC-Pigment noch ein oder mehrere weitere Farbpigmente und/oder Farbstoffe aufweist, die selbstverständlich den genannten Anforderungen an die Lebensmitteltauglichkeit entsprechen müssen.

Die LC-Pigmente können dem elastomeren Material in einer breiten Konzentrationsspanne zugesetzt werden. Unterhalb eines Massenanteils w von 0,01 Gew.-% ist der festigkeitsverbessernde Effekt (und auch der optische Effekt) jedoch gering, während oberhalb von 10 % unerwünschte Materialeigenschaften in den Vordergrund treten können. Insbesondere liegt der Massenanteil des LC-Pigments im elastomeren Material des Mundstücks bei 0,1 bis 5 %, vorzugsweise bei etwa 0,5 bis 1 %.

LC-Pigmente enthalten eine oder mehrere flüssigkristalline Verbindungen, das heißt Substanzen, die in der flüssigen Phase eine zumindest teilweise geordnete Struktur einnehmen. Insbesondere werden bei stäbchenförmigen Molekülen nematische (Parallelorientierung der Molekülachsen), smektische (Parallelorientierung in Schichten/Stapeln) und cholesterische Phasen (helikale Überstruktur aufgrund kontinuierlicher Verdrehung der Molekülachse) unterschieden. Während die helikale Überstruktur der cholesterischen Phase nur durch chirale Moleküle realisierbar ist, können auch in smektischen oder nematischen Phasen helikale Überstrukturen durch Zufügung chiraler Verbindungen (chiraler Phasen) induziert werden. Im Rahmen der vorliegenden Erfindung werden aufgrund ihrer besonders interessanten optischen Effekte helikale Strukturen besonders bevorzugt.

Eine orientierte Ausrichtung der flüssigkristallinen Verbindung kann grundsätzlich während der Herstellung des erfindungsgemäßen Artikels etwa infolge von Scherkräften bei Spritzgieß- oder Tauchverfahren entstehen. Erfindungsgemäß werden LC-Pigmente eingesetzt, in denen die kristalline Verbindung bereits zumindest teilweise orientiert vorliegt und durch dreidimensionale Vernetzung beziehungsweise vernetzende Polymerisation die geordnete Struktur gleichsam "eingefroren" und somit irreversibel ist. Beispielsweise können hier die in DE 199 17 067 A beschriebenen LC-Pigmente zum Einsatz kommen.

Im Rahmen der vorliegenden Erfindung wird unter "Elastomer" beziehungsweise "Elastomerkomponente" ein Polymer mit gummielastischem Verhalten verstanden, das heißt der Fähigkeit, bei Raumtemperatur reversibel auf mindestens das Zweifache seiner Länge gedehnt werden zu können und nach Aufhebung der Dehnungskräfte spontan wieder zumindest annähernd seine Anfangsgestalt einzunehmen. Elastomere sind weitmaschig vernetzte hochpolymere Werkstoffe, wobei die Vernetzung irreversibel, über kovalente chemische Bindungen oder physikalisch und damit meist reversibel realisiert sein kann. Entsprechend der Bestimmung der erfindungsgemäßen Produkte wird das zumindest eine Elastomer bevorzugt ausgewählt aus folgenden Elastomerklassen: Latizes (insbesondere Naturlatizes), Festgummi-Mischungen basierend auf Natur- oder Synthesekautschuken, Silikonelastomere, thermoplastischen Elastomere (TPE) oder Mischungen von diesen. Unter diesen Materialien werden solche ausgewählt, die für den Kontakt mit Lebensmitteln geeignet beziehungsweise zugelassen sind.

Dabei wird unter "Latex" allgemein eine kolloidiale Dispersion von Polymeren in wässrigen Medien natürlicher oder synthetischer Provenienz verstanden. Bei den im Rahmen der vorliegenden Erfindung besonders interessierenden "Naturlatizes" handelt es sich um einen Sammelbegriff für pflanzliche Produkte, nämlich dem weißen Milchsaft verschiedener Pflanzen, insbesondere Kautschukbäumen. Naturlatex ist eine Emulsion von etwa 0,5 bis 1 µm großen Naturkautschuktröpfchen (das heißt 1,4-cis- oder seltener 1,4-trans-Polyisopren) in Wasser, die daneben noch Proteine, Sterine, Lipide, Kohlenhydrate und mineralische Bestandteile enthalten kann. Die Zusammensetzung variiert in Abhängigkeit von der Pflanze. Besonders bevorzugt sind 1,4-cis-Polyisopren-Naturlatizes.

Unter "Festgummi-Mischungen" werden vorliegend Systeme auf der Basis fester Kautschuke verstanden, die bei ihrer Verarbeitung vernetzt (vulkanisiert) werden. Im Rahmen der vorliegenden Erfindung kommen sowohl Naturkautschuke als auch Synthesekautschuke oder von diesen abgeleitete Systeme in Betracht. Bei "Naturkautschuk" handelt es sich um eine aus Naturlatex (s.o.) üblicherweise durch Gerinnung gewonnene feste Masse, die im Wesentlichen 1,4-cis- oder 1,4-trans-Polyisopren (und gegebenenfalls auch Spuren der anderen Latexbestandteile) aufweist. Durch Vernetzung mit einem geeigneten Vernetzer, beispielsweise Schwefel, entsteht das unlösliche und thermoplastisch nicht mehr verarbeitbare Produkt Festgummi. Als "Synthesekautschuke" werden synthetisch hergestellte Polymere sowohl des Isoprens (2-Methyl-buta-1,3-dien) bezeichnet, die damit den gleichen Aufbau wie Naturkautschuk aufweisen, als auch Polymere von anderen 1,3-Dienen. Zu letzteren zählen beispielsweise Methylkautschuk (aus 2,3-Dimethyl-1,3-butadien), Polybutadien (aus 1,3-Butadien) und Polymere, die durch Co- oder Terpolymerisation zweier beziehungsweise dreier unterschiedlicher Monomere entstehen. Im Rahmen der vorliegenden Erfindung besonders bevorzugte Kautschuke umfassen natürliches 1,4-cis-Polyisopren (Naturkautschuk) und synthetisches 1,4-cis-Polyisopren.

"Thermoplastische Elastomere" (TPE) besitzen eine Kombination der Gebrauchseigenschaften von Elastomeren und der Verarbeitungseigenschaften der Thermoplasten. Das bedeutet, TPE sind elastisch verformbar und unter thermischer Aufschmelzung verarbeitbar. Dies wird erreicht, indem in der Polymerkette miteinander unverträgliche Weich- und Hartsegmente vorliegen, die zu einer Mikroseparation führen. Dabei weisen die Weichsegmente elastische Eigenschaften mit hoher Dehnbarkeit und niedriger Glasübergangstemperatur auf, während die kristallisierbaren Hartsegmente eine geringe Dehnbarkeit und eine hohe Glasübergangstemperatur aufweisen und zumeist im Wege der Assoziatbildung physikalisch (reversibel) vernetzen. Wichtige TPE-Klassen sind beispielsweise thermoplastische Elastomere auf Olefinbasis (TPO) ; thermoplastische Naturkautschuke (TP-NR, weiches Segment= vernetzter Naturkautschuk/hartes Segment= Polypropylen); thermoplastische Siliconkautschuke (TP-Q); Styrol-Triblock-Copolymere, beispielsweise SBS (Butadien/Styrol), SIS (Isopren/Styrol), und SEBS (Ethylenbutylen/Styrol) ; thermoplastische Polyurethane (TPU, Ester- oder Etherglycole/Isocyanate), copolymere Polyetherester (CPE, CPA) ; (Polyether-Blockamide (PEBA, Etherdiole/Amide). Mit Ausnahme der im vorliegenden Anwendungsgebiet weniger geeigneten TPU können sämtliche der vorgenannten TPE-Klassen erfindungsgemäß eingesetzt werden.

"Silikone" sind synthetische Polymere, deren Grundstruktur ketten- und/oder netzartig über Sauerstoffatome verknüpfte Siliziumatome sind. Die restlichen Siliziumvalenzen sind über Kohlenwasserstoffreste (meist Methylgruppen) abgesättigt. Im Rahmen der vorliegenden Erfindung kommen "Silikonelastomere" (Silikongummis) in Frage, die durch Vernetzung (Vulkanisation) von Silikonkautschuken gewonnen werden. Silikonkautschuke enthalten als Grundpolymere Polydiorganosiloxane mit vernetzbaren Gruppen (etwa H-Atome, OH- oder Vinyl-Gruppen), und durch Vernetzung in den gummielastischen Zustand überführt werden. Es werden heißvulkanisierende (HTV) und kaltvulkanisierende (RTV) Silikonkautschuke unterschieden. Als HTV-Typen sind erfindungsgemäß Einkomponentensysteme aus hochdisperser Kieselsäure bevorzugt, welche mit geeigneten Vernetzungskatalysatoren bei Temperaturen oberhalb von 100 °C vulkanisiert werden (Festsilikone). Ebenfalls vorteilhaft sind Zweikomponentensysteme, die über die Flüssigkautschuk-Technologie (LSR = liquid silicone rubber) verarbeitet werden. Dabei werden zwei flüssige HTV-Silikonkautschukkomponenten über Additionsvernetzung im Spritzgießautomaten vulkanisiert. Auch bei RTV-Silikonkautschuken sind Ein- und Zweikomponentensysteme bekannt. Im Rahmen der vorliegenden Erfindung sind Ein- oder Zweikomponenten HTV-Systeme bevorzugt.

Im Rahmen der vorliegenden Erfindung kann einerseits vorgesehen sein, dass das gesamte elastomere Material des Mundstücks das zumindest eine LC-Pigment in annähernd homogener Verteilung aufweist. Nach einer alternativen Ausgestaltung ist jedoch ebenfalls denkbar, dass das elastomere Material das LC-Pigment nur bereichsweise, das heißt in Teilbereichen, enthält. Insbesondere kann das LC-Pigment nur in einer oder mehreren einzelnen Schichten enthalten sein. So kann etwa bei einem im mehrgängigen Tauchverfahren hergestellten Mundstück nur die äußerste, zuletzt erzeugte Schicht das LC-Pigment enthalten. Auf diese Weise ist genau die am stärksten mechanisch beanspruchte Schicht erfindungsgemäß verstärkt und weist gleichzeitig den vorteilhaften optischen Effekt auf.

Vorzugsweise handelt es sich bei dem Artikel um einen Sauger, insbesondere einen Beruhigungs- oder Ernährungssauger, eine Trinktülle, einen Beißring oder dergleichen, das heißt um einen Artikel, der zur teilweisen Aufnahme im Mund, gegebenenfalls für den Kontakt mit Lebensmitteln, jedoch nicht zum Verzehr bestimmt ist. Entsprechend betrifft ein weiterer Aspekt der vorliegenden Erfindung die Verwendung von LC-Pigmenten in elastomeren Materialien für Mundstücke der genannten Artikel.

Die Erfindung wird nachfolgend in Ausführungsbeispielen näher erläutert.

### Beispiel 1: Latexsauger

Einer Naturlatexmischung, bestehend aus Rohlatex mit ca. 60 % DRC (dry rubber content, Kautschukgehalt), ca. 1,9 phr (parts per 100 parts rubber) Schwefel (Vernetzer), 0,4 phr Dibenzyldithiocarbamat (Vulkanisationsbeschleuniger), 0,4 phr ZnO (Beschleunigeraktivator) und 0,3 phr 1,2'-Methylen-bis-(4-methyl-6-tert-butylphenol) (Alterungsschutzmittel), wurden 1 Gew.-% LC-Pigment auf Acrylatbasis (Helicone HC, Wacker-Chemie GmbH) zugesetzt.

Aus dieser Mischung wurden im mehrgängigen Tauchverfahren Sauger hergestellt. Als Vergleich wurden auf die gleiche Weise Sauger, aber ohne den Zusatz von LC-Pigment hergestellt.

Die so hergestellten Sauger sind - ebenso wie Vergleichssauger ohne LC-Pigment - nicht transparent. Gegenüber der üblichen latexgelben Färbung der Vergleichssauger schimmern die erfindungsgemäßen Sauger jedoch in einer goldenen Färbung.

### Beispiel 2: Silikonsauger

Eine Zweikomponenten-HTV-Festsilikonmischung (50 : 50) (Elastosil R plus 4000, Wacker-Chemie GmbH) wurde mit einem Vernetzungskatalysator (Pt) und mit 0,5 Gew.-% LC-Pigment auf Acrylatbasis (Helicone HC, Wacker-Chemie GmbH) homogen vermischt.

Aus dieser Mischung wurden im Spritzgießautomaten bei einer Werkzeugtemperatur von 165 °C Sauger hergestellt. Als Vergleich wurden auf die gleiche Weise Sauger, aber ohne den Zusatz von LC-Pigment hergestellt.

Die so hergestellten Sauger sind - ebenso wie Vergleichssauger ohne LC-Pigment - transparent. Anders als die Vergleichssauger weisen die erfindungsgemäßen Sauger jedoch einen Glitzereffekt auf sowie einen pigmentabhängigen Farbeffekt, der unter anderem mit Lichteinfalls- und Betrachtungswinkel variiert.

### Beispiel 3: TPE-Trinktüllen

TPE-Material vom Typ Cawiton PR 1088C (Wittenburg B.V., Niederlande) wurde mit 0,5 Gew.-% LC-Pigment auf Acrylatbasis (Helicone HC, Wacker-Chemie GmbH) versetzt.

Aus dieser Mischung wurden im Spritzgussverfahren Trinktüllen hergestellt.

Die Trinktüllen zeigten bei Lichteinstrahlung einen Glitzereffekt, bei dem die Farbgebung vom Lichteinfalls- und Betrachtungswinkel abhängt.

### Untersuchung der Reißfestigkeit

Die Reißfestigkeit der erfindungsgemäßen Artikel gemäß den Beispielen 1 bis 3 wurde mit einer Zwick-Prüfmaschine bestimmt und mit denen der entsprechenden Vergleichsartikel ohne LC-Pigment verglichen. Dabei zeigten die erfindungsgemäßen Artikel eine um bis zu 10 % erhöhte Reißfestigkeit gegenüber den Vergleichssaugern. Mit zunehmender Lagerung der Artikel kann sich dieser Effekt noch weiter erhöhen.

### Untersuchung des Migrationsverhaltens

Es wurden Migrationsversuche (Globalmigration gemäß deutschem Lebensmittel- und Bedarfsgegenständegesetz LMBG) der erfindungsgemäßen Artikel gemäß den Beispielen 1 bis 3 durchgeführt, bei denen die Freisetzung der LC-Pigmente infolge Entmischung untersucht wurde. Überraschenderweise konnte trotz der Polaritätsunterschiede zwischen den LC-Pigmenten und den jeweiligen Matrixpolymeren in keinem Fall die Freisetzung von Pigmenten nachgewiesen werden. Dies bedeutet, dass die LC-Pigmente in den Materialien verbleiben, was die Voraussetzung für ihren Einsatz in Materialien ist, die mit Lebensmitteln in Kontakt kommen.

## Patentansprüche

1. Saug- und Kauartikel für Babys oder Kleinkinder, umfassend mindestens ein Mundstück aus einem im Wesentlichen elastomeren Material, welches zumindest eine Elastomerkomponente sowie zumindest ein flüssigkristallines Pigment (LC-Pigment) enthält,
**dadurch gekennzeichnet, dass**
das zumindest eine LC-Pigment mindestens eine flüssigkristalline Substanz umfasst, die in einer zumindest teilweise geordneten Struktur dreidimensional vernetzt vorliegt.

2. Artikel nach einem der vorhergehenden Ansprüche,
**dadurch gekennzeichnet, dass**
das zumindest eine LC-Pigment einen Massenanteil (w) von 0,01 bis 10 %, insbesondere von 0,1 bis 5 %, vorzugsweise von 0,5 bis 1 %, in dem elastomeren Material aufweist.

3. Artikel nach einem der vorhergehenden Ansprüche,
**dadurch gekennzeichnet, dass**
die mindestens eine flüssigkristalline Substanz in einer helikalen Überstruktur vorliegt.

4. Artikel nach einem der vorhergehenden Ansprüche,
**dadurch gekennzeichnet, dass**
die mindestens eine flüssigkristalline Substanz eine chirale Phase aufweist.

5. Artikel nach einem der vorhergehenden Ansprüche,
**dadurch gekennzeichnet, dass**
das zumindest eine LC-Pigment dem elastomeren Material eine optische Wirkung, insbesondere eine farbgebende und/oder reflektierende Wirkung, verleiht.

6. Artikel nach einem der vorhergehenden Ansprüche,
**dadurch gekennzeichnet, dass**
die zumindest eine Elastomerkomponente ausgewählt ist aus der Gruppe enthaltend Latizes, insbesondere Naturlatizes, Festgummi-Mischungen basierend auf Natur- oder Synthesekautschuken, Silikonelastomere, thermoplastische Elastomere (TPE) oder Mischungen von diesen.

7. Artikel nach einem der vorhergehenden Ansprüche,
**dadurch gekennzeichnet, dass**
das elastomere Material neben dem zumindest einen LC-Pigment zumindest ein Farbpigment und/oder zumindest einen Farbstoff enthält.

8. Artikel nach einem der Ansprüche 1 bis 7,
**dadurch gekennzeichnet, dass**
das gesamte elastomere Material das zumindest eine LC-Pigment enthält.

9. Artikel nach einem der Ansprüche 1 bis 7,
**dadurch gekennzeichnet, dass**
das elastomere Material das zumindest eine LC-Pigment nur bereichsweise enthält.

10. Artikel nach Anspruch 9,
**dadurch gekennzeichnet, dass**
das elastomere Material mehrere Schichten aufweist und das zumindest eine LC-Pigment nur in einzelnen Schichten enthalten ist.

11. Artikel nach einem der vorhergehenden Ansprüche,
**dadurch gekennzeichnet, dass**
der Artikel in einem Spritzgussverfahren oder einem Tauchverfahren hergestellt ist.

12. Artikel nach einem der vorhergehenden Ansprüche,
**dadurch gekennzeichnet, dass**
es sich bei dem Artikel um einen Sauger, insbesondere einen Beruhigungs- oder Ernährungssauger, eine Trinktülle, einen Beißring oder dergleichen handelt.

13. Artikel nach einem der vorhergehenden Ansprüche,
**dadurch gekennzeichnet, dass**
der Artikel, insbesondere das Mundstück, eine nichtflächige dreidimensionale Gestalt aufweist.

## Claims

1. Sucking and chewing article for babies or small children, said article comprising at least one mouthpiece of an essentially elastomeric material that contains at least one elastomer component and at least one liquid crystalline pigment (LC pigment),
**characterized in that**
the at least one LC pigment comprises at least one liquid crystalline substance which is present in an at least partially ordered structure in a three-dimensionally cross-linked form.

2. Article in accordance with one of the previous Claims,
**characterized in that**
a mass fraction (w) of the at least one LC pigment in the elastomeric material is from 0.01 to 10%, in particular from 0.1 to 5%, preferably from 0.5 to 1%.

3. Article in accordance with one of the previous Claims,
**characterized in that**
the at least one one liquid crystalline substance is present in a helical superstructure.

4. Article in accordance with one of the previous Claims,
**characterized in that**
the at least one liquid crystalline substance has a chiral phase.

5. Article in accordance with one of the previous Claims,
**characterized in that**
the minimum of one LC pigment imparts the elastomeric material with an optical effect, in particular, a color-donning and/or reflecting effect.

6. Article in accordance with one of the previous Claims, **characterized in that**
the at least one elastomer component is selected from the group comprising latices, in particular natural latices, solid rubber mixtures based on natural or synthetic rubbers, silicone elastomers, thermoplastic elastomers (TPE), or mixtures thereof.

7. Article in accordance with one of the previous Claims,
**characterized in that**,
besides the at least one LC pigment, the elastomeric material contains at least one color pigment and/or at least one dye.

8. Article in accordance with one of the Claims 1 through 7,
**characterized in that**
the total elastomeric material contains the at least one LC pigment.

9. Article in accordance with one of the Claims 1 through 7,
**characterized in that**
the elastomeric material contains the at least one LC pigment only in specific regions.

10. Article in accordance with Claim 9,
**characterized in that**
the elastomeric material comprises several layers and contains the at least one LC pigment only in individual layers.

11. Article in accordance with one of the previous Claims,
**characterized in that**
the article is manufactured by an injection molding process or by an immersion process.

12. Article in accordance with one of the previous Claims,
**characterized in that**
the article is a sucker, in particular a pacifier sucker or feeding sucker, a drinking spout, a bite ring or the like.

13. Article in accordance with one of the previous Claims,
**characterized in that**
the article, in particular the mouthpiece, has a nonplanar three-dimensional shape.

## Revendications

1. Article de mastication et de succion destiné à des bébés ou des enfants en bas âge, comprenant au moins une pièce buccale réalisée dans un matériau essentiellement élastomère qui contient au moins un composant élastomère ainsi qu'au moins un pigment à cristaux liquides (pigment CL),
**caractérisé en ce que**
le pigment CL au moins au nombre de un comprend au moins une substance à cristaux liquides qui se présente sous une forme réticulée de façon tridimensionnelle dans une structure au moins partiellement ordonnée.

2. Article selon une des revendications précédentes,
**caractérisé en ce que**
le pigment CL au moins au nombre de un présente une fraction massique (w) de 0,01 à 10 %, en particulier de 0,1 à 5 %, de préférence de 0,5 à 1 %, dans le matériau élastomère.

3. Article selon une des revendications précédentes,
**caractérisé en ce que**
la substance à cristaux liquides au moins au nombre de un est présente dans une superstructure hélicoïde.

4. Article selon une des revendications précédentes,
**caractérisé en ce que**
la substance à cristaux liquides au moins au nombre de un présente une phase chirale.

5. Article selon une des revendications précédentes,
**caractérisé en ce que**
le pigment CL au moins au nombre de un confère au matériau élastomère un effet optique, en particulier un effet colorant et/ou réfléchissant.

6. Article selon une des revendications précédentes,
**caractérisé en ce que**
le composant élastomère au moins au nombre de un est sélectionné dans le groupe contenant des latex, en particulier des latex naturels, des mélanges de caoutchouc solide à base de caoutchoucs naturels ou synthétiques, des élastomères de silicone, des élastomères thermoplastiques (TPE) ou leurs mélanges.

7. Article selon une des revendications précédentes,
**caractérisé en ce que**
le matériau élastomère contient, outre le pigment CL au moins au nombre de un, au moins un pigment colorant et/ou au moins une matière colorante.

8. Article selon une des revendications 1 à 7,
**caractérisé en ce que**
la totalité du matériau élastomère contient le pigment CL au moins au nombre de un.

9. Article selon une des revendications 1 à 7,
**caractérisé en ce que**
le matériau élastomère ne contient le pigment CL au moins au nombre de un que par zones.

10. Article selon la revendication 9,
**caractérisé en ce que**
le matériau élastomère présente plusieurs couches, et **en ce que** le pigment CL au moins au nombre de un n'est contenu que dans des couches individuelles.

11. Article selon une des revendications précédentes,
**caractérisé en ce que**
l'article est fabriqué dans un procédé de moulage par injection ou un procédé par immersion.

12. Article selon une des revendications précédentes,
**caractérisé en ce que**,
concernant l'article, il s'agit d'une tétine, en particulier d'une tétine d'apaisement ou d'alimentation, d'un embout pour boire, d'un anneau de dentition ou d'un objet similaire.

13. Article selon une des revendications précédentes,
**caractérisé en ce que**
l'article, en particulier la pièce buccale, présente une forme tridimensionnelle non plane.
